# EUROPEAN PATENT SPECIFICATION

(11) **EP 2 071 780 B1**
(45) Date of publication and mention of the grant of the patent: **30.11.2011**
(21) Application number: 08170568.3
(22) Date of filing: 03.12.2008
(51) Int. Cl.: H04L 12/56

(54) **Network, node device, network redundancy method and recording medium**
Netzwerk, Knotenvorrichtung, Netzwerkredundanzverfahren und Aufzeichnungsmedium
Réseau, dispositif de noeud, procédé de redondance de réseau et support d'enregistrement

(30) Priority: 14.12.2007 JP 2007323812
(43) Date of publication of application: 17.06.2009
(73) Proprietor: NEC Corporation, Minato-ku Tokyo 108-8001 (JP)
(72) Inventor: Ozaki, Hirokazu, Tokyo (JP)
(74) Representative: Betten & Resch

(56) References cited:
- EP-A- 0 841 824
- EP-A- 1 940 091
- DE-A1- 19 928 484
- LI ET AL: "On investigating overlay service topologies" COMPUTER NETWORKS, ELSEVIER SCIENCE PUBLISHERS B.V., AMSTERDAM, NL, vol. 51, no. 1, 17 January 2007 (2007-01-17), pages 54-68, XP005708357 ISSN: 1389-1286

## Description

### BACKGROUND OF THE INVENTION

### TECHNICAL FIELD

The present invention relates to a network, a node device, a network redundancy method, and a recording medium storing a network redundancy program, and in particular, to a network, a node device, a network redundancy method, and a recording medium storing a network redundancy program capable of coping with occurrence of failure on an existing network in which a plurality of autonomous networks exist.

### BACKGROUND ART

While the internet is being increasingly arranged as social infrastructure, attention has been attracted to improvement in reliability thereof as an important issue. Particularly, at occurrence of network failure, it is essential to quickly restore the failure.

Various methods have been proposed to recover failure on a transmission path, e.g., disconnection of an optical fiber line and failure in a node such as failure in a router or a switch.

There is generally adopted a method of providing redundancy to devices and transmission routes. This method is simple and is capable of quickly and securely restoring the failure.

Concretely, there have been known, for example, Automatic Protection Switching (APS) of Synchronous Digital Hierarchy (SDH)/Synchronous Optical NETwork (SONET) and Link Aggregation of Ethernet (registered trademark) which are employed as standards in the world. To provide redundancy to devices, there may be used, for example, a method to duplicate a main signal section and a control section.

However, the redundancy results in increase of the device and the network in size and cost. Hence, the redundancy is partially provided in actual cases. The internet is inherently a set of a large number of networks and basically includes a topology of mesh structure. That is, the internet has intrinsically redundant structure.

Therefore, in consideration of cost merit or cost effectiveness, it is rather favorable to employ a failure recovering method in which at occurrence of failure, the packet path is altered to detour the point of the failure.

However, if the above method is employed, it is required for a pertinent node to again calculate the path according to information of the failure to determine a new route for the packet. Since the calculation and determination of the new route requires at least several seconds or several minutes to several tens of minutes in worst cases, this method is not appropriate for applications requiring instantaneous recovery of the failure, for example, Voice Over Internet Protocol (VoIP) and a videoconference.

Fatal failure possibly occurs in a communication system operating for an overall region due to, for example, a natural disaster such as an earthquake, a big fire, a war, and an act of terrorism. In such situation, no communication can be carried out through the region. This may stop operation of the overall system of the network, i.e., the internet system.

In the internet, autonomous systems are mutually connected. In each autonomous system, there is basically disposed one organization for the operation and management of the system, and the same routing protocol is shared in the network.

As a routing protocol in the autonomous network (Interior Gateway Protocol (IGP)), there are representatively used, for example, Routing Information Protocol (RIP), Open Shortest Path First (OSPF; RFC2328), and Intermediate System to Intermediate System (IS-IS), which have been broadly employed in the world.

Border Gateway Protocol 4 (BGP4) is generally adopted as the routing protocol i.e., Exterior Gateway Protocol (EGP) between autonomous systems (AS). Between routers each employing BGP4, integrated routing information is exchanged to transfer packets therebetween according to information of connection of the network and a predetermined policy, e.g., whether or not the packet is allowed to pass the routers and priority of the packet.

When BGP4 is adopted, since BGP4 operates based on the integrated routing information and suppresses vibration in the determination of a route, a considerably long period of time may be required in the detection of an abnormality on a route and in the setting and the determination of a new route.

At occurrence of failure on an autonomous network existing on a path between particular autonomous networks, there may take place a situation wherein all paths between the other autonomous networks are lost and it is not possible to restore the network.

FIG. 7 shows an example of a network configuration according to the present invention. The network includes six autonomous networks AS1 to AS6 between which routing is carried out by BGP4.

FIG. 8 shows a state in which the first autonomous network AS1 has stopped its operation due to, for example, a disaster or a fire.

If the second and sixth autonomous networks AS2 and AS6 were communicating with each other via the first autonomous network AS1 at the occurrence of the failure, it is required that the second and sixth autonomous networks AS2 and AS6 change the respective communication routes to conduct communication through the third, fourth, and fifth autonomous networks AS3, AS4, and AS5 as AS3→AS4→AS5.

However, the route change takes a long period of time due to the property of BGP4. In addition, if the policy of BGP4 allows only the route which passes the first autonomous network AS1, the communication between the second and sixth autonomous networks AS2 and AS6 is disabled. This results in disconnection of the communication.

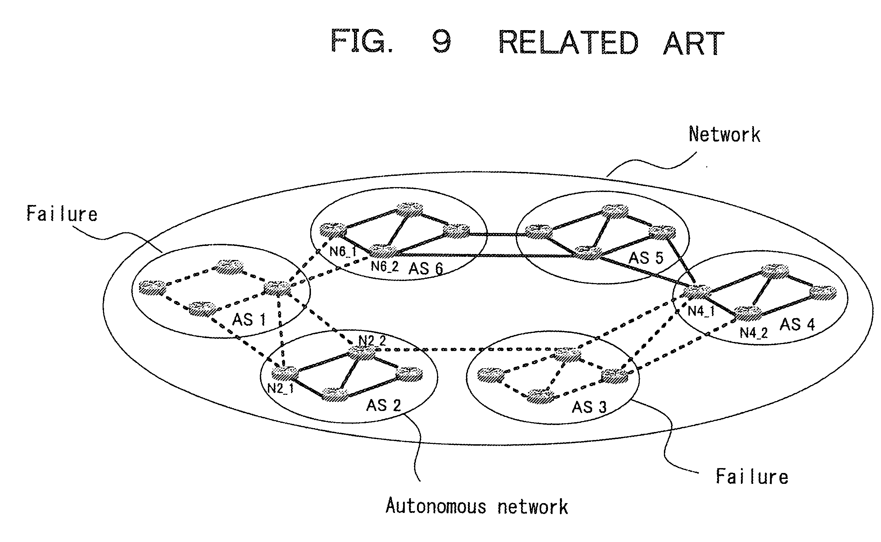

FIG. 9 shows a state in which the first and third autonomous networks AS1 and AS3 have stopped operation. The second autonomous networks AS2 is isolated and is unable to communicate with the fourth to sixth autonomous networks AS4 to AS6.

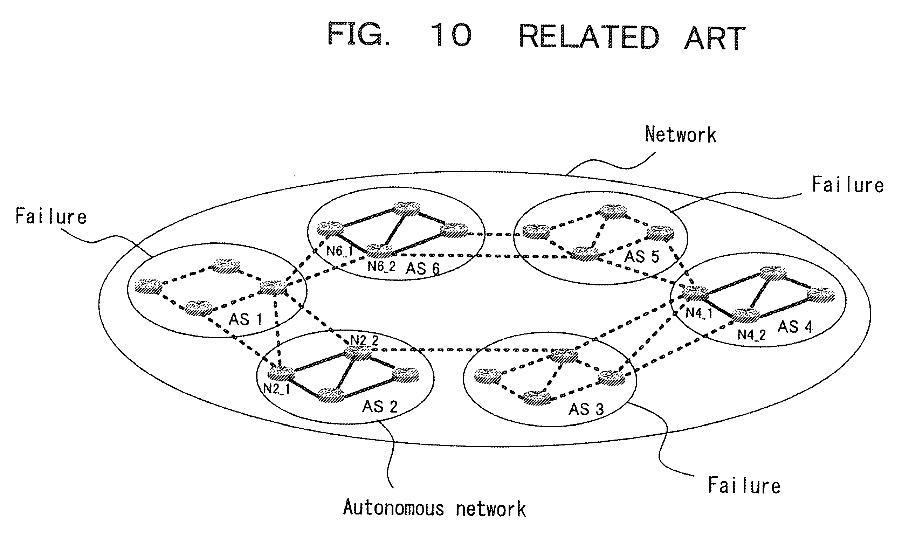

FIG. 10 shows a state in which operation is stopped in the first, third, and fifth autonomous networks AS1, AS3, and AS5. The second, fourth, and sixth autonomous networks AS2, AS4, and AS6 are isolated, and hence it is not possible to conduct communication therebetween.

With increase in the number of failed autonomous networks AS, the probability of disability of communication between the remaining autonomous networks becomes higher.

This requires development of a control method capable of restoring the network including a plurality of autonomous networks AS1 to AS6 at occurrence of failure on the network.

In this regard, a technique for use with a multi-dimensional network which reduces a period of wait time to communicate a message without requiring any buffering of a message packet in each node has been described in Japanese Patent Laid-Open Publication Ser. No. 5-153163.

Also, a technique which reduces the number of connections on a backbone network and the traffic of route information to increase reliability in the relaying of data and which simplifies the system configuration has been described in Japanese Patent Laid-Open Publication No. 2004-247871.

Patent Application DE 199 28 484 A1 discloses a method for controlling the data transmission in a duplicated network when failure occurs, wherein the network comprises two same networks.

Patent Application EP-A-0 841 824 discloses a failure restoration system suitable for a large scale network according to the preamble of claim 1 of the present invention. The failure restoration system comprises a distributed hierarchical routing section which is adapted to set up a main path and previously determine an alternate path for the main path in a network. An alternate path selection section is adapted to obtain complete source route information for the main path when it attempts to set up the main path. The alternate path selection section adds the complete source information to a SETUP signaling message for setting up the alternate path, thereby provides a physical alternate path as much different as possible from the main path.

In the article "On investigation overlay service topologies", Computer Networks, ELSEVIER Science Publishes B.V., vol. 51, no. 1, 17 January 2007, pages 54-68, ISSN 1389-1286, Zhi Li and Prasant Mohapatra focus on the overlay network topology construction issue- The performance and overhead of the existing overlay topologies are firstly evaluated and compared, and then the overlay topology construction problem is formulated when two new heuristic methods to construct efficient overlay topologies are proposed.

However, these articles have not described the redundancy implemented by adding an autonomous additional network dedicated to backup routes to a network including a plurality of autonomous networks and have not suggested necessity for the redundancy.

### SUMMARY OF THE INVENTION

It is therefore an object of the invention to provide a network, a node device, a network redundancy method, and a recording medium having stored a network redundancy program capable of restoring communication at occurrence of failure in a network including a plurality of autonomous networks.

### <Network>

A network according to the present invention includes an existing network including a plurality of autonomous networks using one and the same routing protocol and an additional network added to the existing network for redundancy. The additional network is less in size than the existing network. Traffic of the existing network is transmitted via the additional network.

### <Node Device>

A node device according to the present invention included in an autonomous network in which one and the same routing protocol is

employed. The node device is an edge node device to connect to another autonomous network. To an existing network including the plurality of such autonomous networks, an additional network which is an autonomous network dedicated to backup routes is added to provide redundancy. The additional network is less in size than the existing network. The edge node device conducts switching from the existing network to the additional network to transmit traffic on the existing network by use of the additional network.

### <Network redundancy method>

A network redundancy method according to the present invention is used for an existing network including a plurality of autonomous networks in which one and the same routing protocol is employed. The network redundancy method includes the steps of forming the existing network redundantly by adding an additional network which is an autonomous network dedicated to backup routes to the existing network, the additional network being less in size than the existing network; and transmitting traffic on the existing network via the additional network.

A network redundancy method according to the present invention is used for a node device included in an autonomous network in which one and the same routing protocol is employed. The node device is an edge node device connecting to another autonomous network. The plurality of autonomous networks included in an existing network to which an additional network is added to provide redundancy, the additional network being an autonomous network dedicated to backup routes and being less in size than the existing network. The edge node device performs steps of: switching from the existing network to the additional network; and transmitting traffic on the existing network by use of the additional network.

### <Recording medium storing network redundancy program>

A recording medium storing a network redundancy program according the present invention stores a network redundancy program to be executed on a node device included in an autonomous network in which one and the same routing protocol is employed. The node device is an edge node device connecting to another autonomous network. The plurality of autonomous networks included in an existing network to which an additional network is added to provide redundancy, the additional network being an autonomous network dedicated to backup routes and being less in size than the existing network. The program makes the edge node device execute processing of: switching from the existing network to the additional network; and transmitting traffic on the existing network by use of the additional network.

### BRIEF DESCRIPTION OF THE DRAWINGS

The objects and features of the present invention will become more apparent from the consideration of the following detailed description taken in conjunction with the accompanying drawings in which:

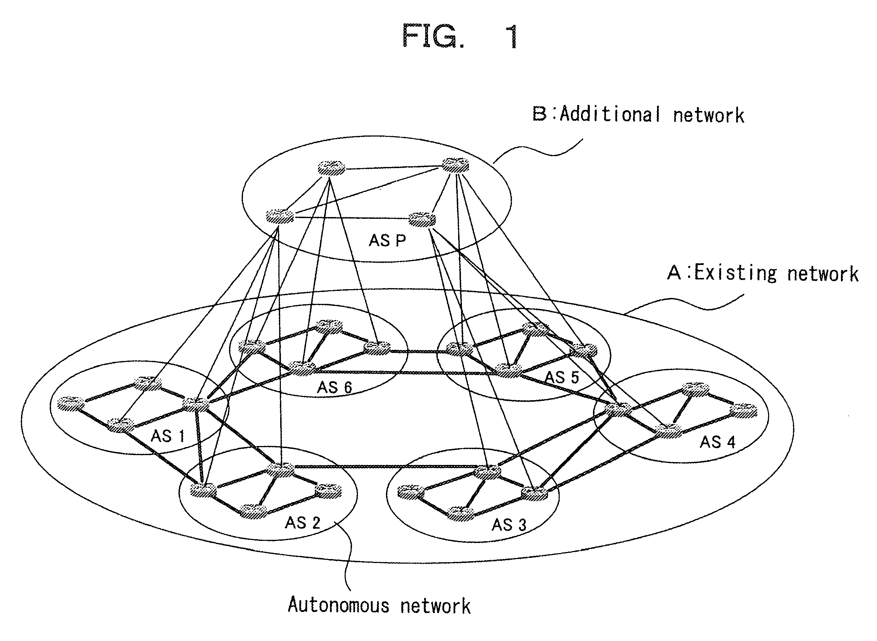

FIG. 1 is a schematic block diagram showing an example of structure of a network of an exemplary embodiment;

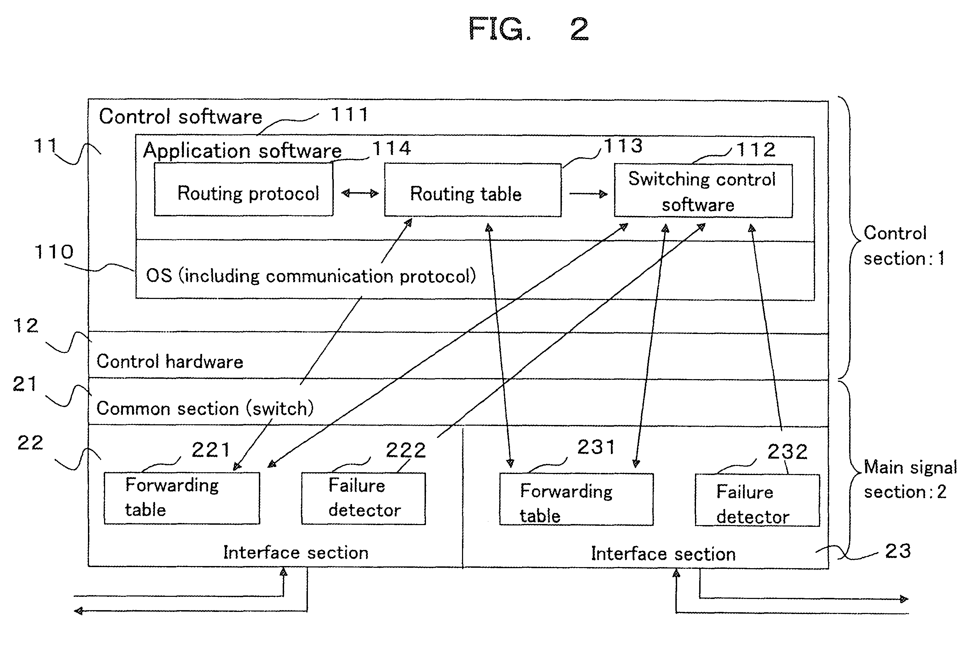

FIG. 2 is a block diagram showing software mounting positions in an edge node device of an exemplary embodiment;

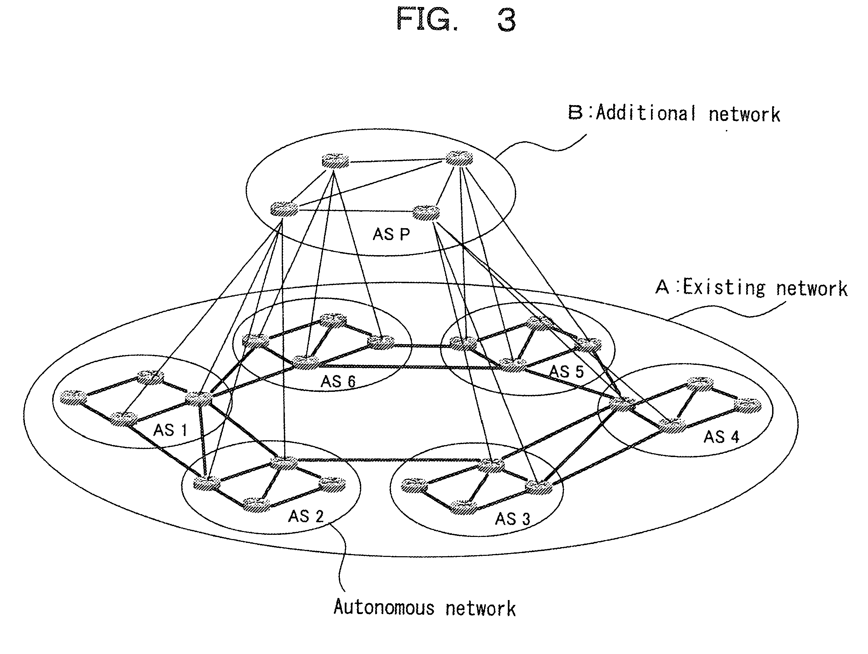

FIG. 3 is a first diagram showing an outline of operation in a network of a first exemplary embodiment;

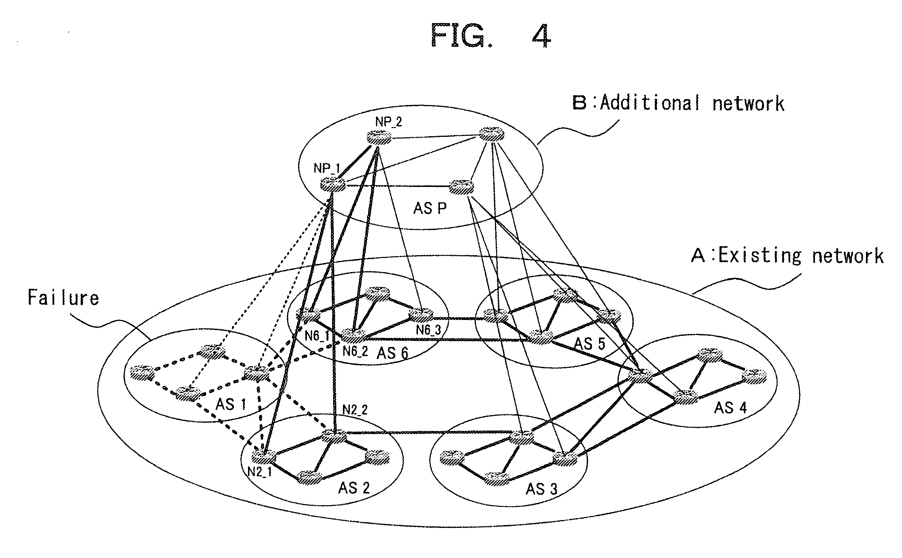

FIG. 4 is a second diagram showing the outline of the operation of the first exemplary embodiment;

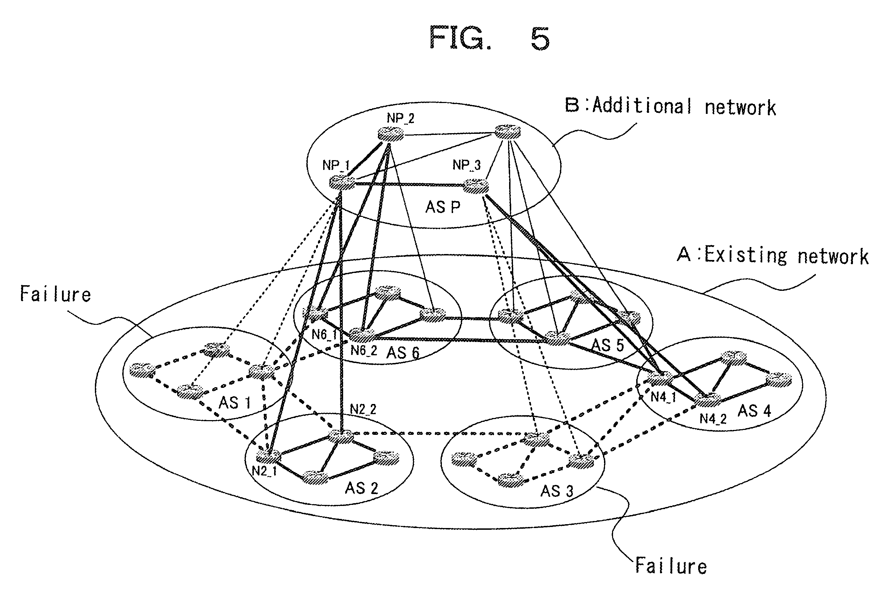

FIG. 5 is a third diagram showing the outline of the operation of the first exemplary embodiment;

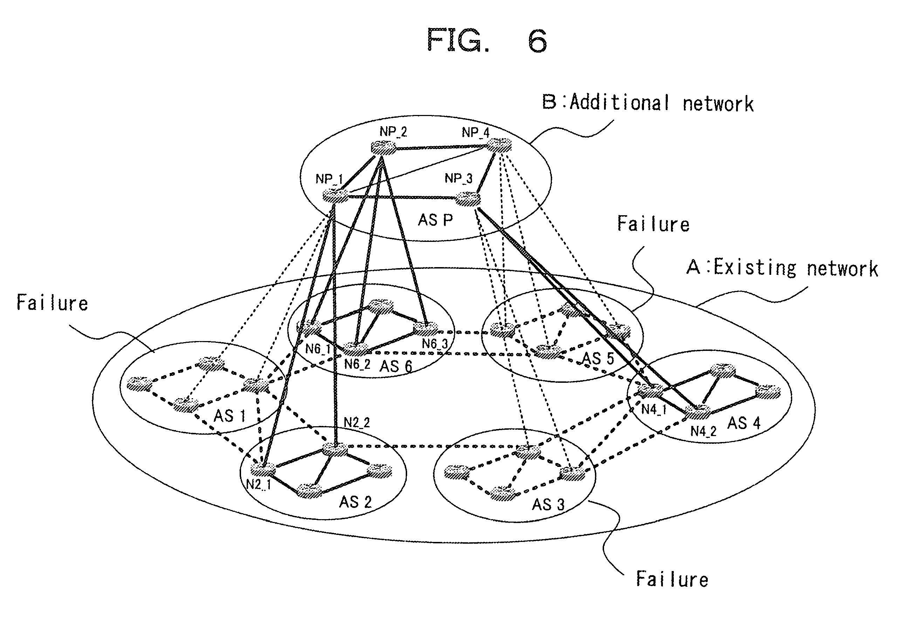

FIG. 6 is a fourth showing the outline of the operation of the first exemplary embodiment;

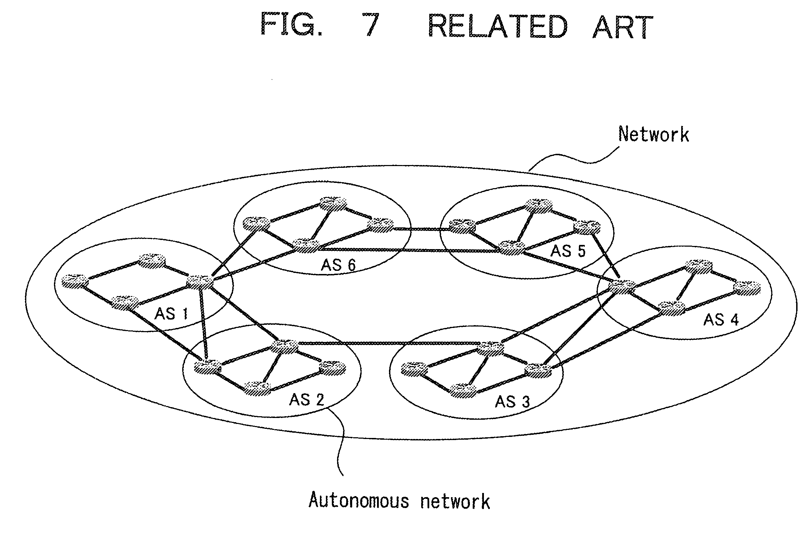

FIG. 7 is a diagram showing an example of structure of an existing network;

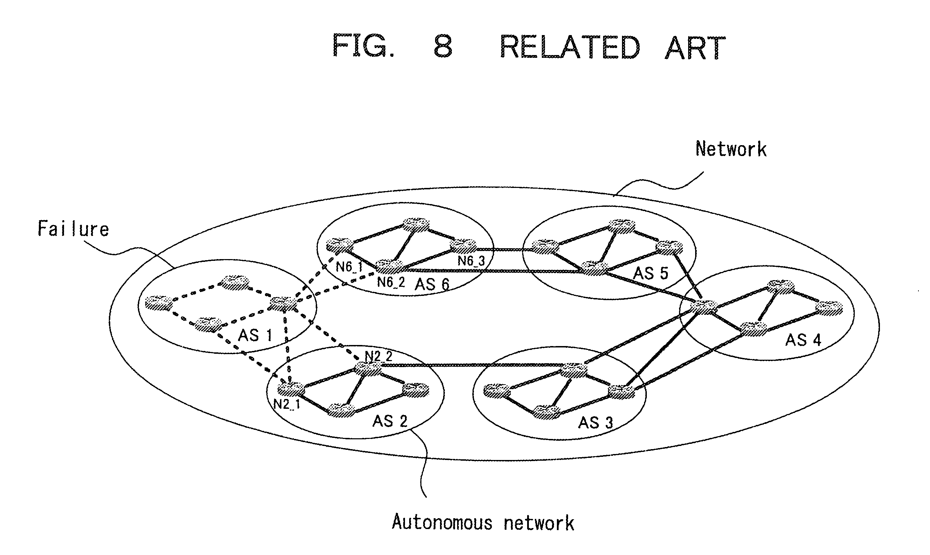

FIG. 8 is a diagram showing an example of routing in the existing network;
FIG. 9 is a diagram showing an example of routing in the existing network; and
FIG. 10 is a diagram showing an example of routing in the existing network.

### EXEMPLARY EMBODIMENT

### <Outline of embodiment of network>

Referring now to FIG. 1, description will be given of an outline of a network of an exemplary embodiment.

The network of the embodiment is constructed by adding additional network B which is an autonomous network dedicated to backup routes to existing network A including a plurality of autonomous networks in which one and the same routing protocol is adopted to thereby provide redundancy. Traffic of an existing network A is transmitted using an additional network B.

In the embodiment, the traffic of the existing network A is transmitted via the additional network B. Therefore, at occurrence of failure in the network A including a plurality of autonomous networks AS1 to AS6, communication can be restored in a short period of time. Referring next to the accompanying drawings, description will be given in detail of the network according to the embodiment.

### <Network configuration>

Referring to FIG. 1, description will be given of a network configuration of the embodiment. The network includes the existing network A and additional network B.

The network A includes the plurality of autonomous networks AS1 to AS6. The additional network B is dedicated to backup routes to provide redundancy to the existing network A and includes at least one autonomous network ASP.

The network of the embodiment is implemented by adding additional network B to network A including the autonomous networks AS1 to AS6 to provide redundancy.

As a routing protocol in the autonomous network of the embodiment, there may be employed, for example, RIP, OSPF, and IS-IS. As a routing protocol between the autonomous networks, it is possible to adopt, for example, EGP and BGP4.

Edge node devices being the input/output ports of the respective autonomous networks AS 1 to AS6 of the existing network A connect to node devices (i.e., node devices connecting to other autonomous networks) disposed in the autonomous network of the additional network B.

Specifically, in the network of the embodiment, the node devices are additionally installed in the additional network B. An interface card is also added to each edge node device on the respective autonomous networks AS1 to AS6 on the existing network A to connect the edge node devices on the existing network A to the node devices on the additional network B.

The node devices on the additional network B are mutually coupled in the form of a mesh to construct one autonomous system independent of the existing network A. In operation, the additional network B is dedicated to backup routes of the existing network A. On the additional network B, bandwidth of each link and a transfer capacity of each node device are lower than those of the existing network A. That is, the additional network B is preferably constructed as a small-sized and inexpensive network.

After the system is configured as shown in FIG. 1, software to control the change-over or switching in the redundant structure is installed in each edge node device on the first to sixth autonomous networks AS1 to AS 6 of the existing network A to thereby construct the network.

### <Node device configuration>

Referring to FIG. 2, description will be given of a configuration of a node device according to the embodiment. FIG. 2 shows mounting locations of software in the node device of the embodiment.

The node device of the embodiment includes a control section 1 and a main signal section 2. The control section 1 includes control software 11 and control hardware 12. The main signal section 2 includes a common section (switch) 21 and interface sections 22 and 23.

The software 11 of the control section 1 includes an Operating System (OS including a communication protocol) 110 and application software 111. Application software 111 includes switching control software 112, a routing table 113, and a routing protocol 114.

The interfaces 22 and 23 of the main signal section 2 respectively include forwarding tables 221 and 231 and failure detecting sections 222 and 232.

The switching control software 112 of the embodiment has a function to refer to a state of failure, a function to refer to the routing table 113, a function to refer to and to re-write the forwarding tables 221 and 231, and a function to create and to transmit a BGP4 message.

### <Outline of operation in network>

Referring to FIGS. 1 to 6, description will be given of operation in the network of the embodiment. FIGS. 3 to 6 show an outline of the operation.

FIG. 3 shows an ordinary state wherein no failure exists in the existing network A. In this situation, routing protocols independently operate in the networks A and B, respectively. Although routing information is not exchanged between the networks A and B, the node devices included in the additional network B collect BGP4 routing information of the existing network A associated therewith.

In the state of FIG. 3, traffic is closed in the existing network A, that is, no communication takes place via the additional network B. Also, assume that the second autonomous network AS2 communicates via the first autonomous network AS1 with the sixth autonomous network AS6. FIG. 4 shows operation of the system when the first autonomous network AS1 stops operation due to a disaster or an accident in the state of FIG. 3.

At occurrence of failure on the first autonomous network AS1 as shown in Fig. 4, each of the edge node devices N2_1, N2_2, N6_1, and N6_2 of the second and sixth autonomous networks AS2 and AS6 faced with the first autonomous network A81 detects disconnection of the link to the first autonomous network AS1 and then changes the communication route to a route which passes via the additional network B.

For example, each of devices N2_1 and N2_2 replaces the communication route associated with the first autonomous network AS1 by a path to the node device NP_1 on the additional network B to communicate packets using the path.

Each of the edge node devices N6_1 and N6_2 in the sixth autonomous network AS6 changes the communication route for the first autonomous network AS1 to a new path to the node device NP_2 on the additional network B to communicate packets using the new path.

The node devices NP__1 and NP_2 in the additional network B collect BGP4 information of the existing network A and hence recognize that the second and sixth autonomous network AS2 and AS6 communicated with each other via the first autonomous network AS1.

The node device NP_1 in the additional network B recognizes occurrence of failure on the first autonomous network AS1 by receiving a packet from either one of the edge node devices N2_1 and N2_2 on the second autonomous network AS2.

The node device NP_2 recognizes occurrence of failure on the first autonomous network AS1 by receiving a packet from either one of the edge node devices N6_1 and N6_2 on the sixth autonomous network AS6.

The node devices NP_1 and NP_2 in the additional network B hence detour the first autonomous network AS1 to relay traffic between the second and sixth autonomous networks AS2 and AS6 (AS2→NP_1→NP_2→AS6).

If failure takes place on the first autonomous network AS1 while the second autonomous network AS2 is communicating via the first autonomous network AS1 with the sixth autonomous network AS6, the edge node devices N2_1 and N2_2 of the second autonomous networks AS2 change the communication route coupled with the first autonomous network AS1 to paths to the node device NP_1 on the additional network B.

The edge node devices N6_1 and N6_2 on the sixth autonomous network AS6 change the communication route coupled with the first autonomous network AS1 to paths to the node device NP_2 on additional network B.

On the basis of BGP4 information collected from the existing network A, the node devices NP_1 and NP_2 on the additional network B relay traffic between the second and sixth autonomous networks AS2 and AS6 in consideration of the route AS2→AS1→AS6 on the existing network A (AS2→NP1→NP_2→AS6).

As a result, according to the network of the embodiment, even if failure occurs in the first autonomous network AS1, it is possible to continuously conduct communication between the second and sixth autonomous networks AS2 and AS6.

Assume that the second and fourth autonomous networks AS2 and AS4 communicate with each other via the third autonomous network AS3 in the state of FIG. 4.

FIG. 5 shows operation of the system when the third autonomous network AS3 stops its operation due to a disaster or an accident in the state.

In FIG. 5, failure takes place in the first and third autonomous networks AS1 and AS3.

As shown in FIG. 5, at occurrence of failure in the third autonomous network AS3, the edge node device N2_2 on the second autonomous network AS2 detects disconnection of the link coupled with the third autonomous network AS3 to change the communication route to a path for communication via the additional network B.

Similarly, each of the edge node devices N4_1 and N4_2 on the fourth autonomous network AS4 detects disconnection of the link with the third autonomous network AS3 to change the communication route to a path for communication via the additional network B.

The node devices NP_1 and NP_3 on the additional network B collect BGP4 information of the existing network A and hence recognize that the second and fourth autonomous networks AS2 and AS4 communicated with each other via the third autonomous network AS3.

The node device NP_1 on the additional network B recognizes occurrence of failure on the third autonomous network AS3 by receiving a packet from the edge node device N2_2 on the second autonomous network AS2.

Also, the node device NP_3 recognizes occurrence of failure on the third autonomous network AS3 by receiving a packet from either one of the edge node devices N4_1 and N4_2 on the fourth autonomous network AS4.

Therefore, the node devices NP_1 and NP_3 on the additional network B detour the third autonomous network AS3 to relay traffic between the second and fourth autonomous networks AS2 and AS4 (AS2→NP_1→NP_3→AS4).

As a result, at occurrence of failure on the first and third autonomous networks AS1 and AS3, the node devices NP_1, NP_2, and NP_3 on the additional network B can restore the communication for the second autonomous network AS2 isolated due to the failure in the existing network A.

Assume in the state of FIG. 3 that the second and sixth autonomous networks AS2 and AS6 communicate with each other via the third to fifth autonomous networks AS3 to AS5 (AS2→AS3→AS4→AS5→AS6).

FIG. 6 shows operation of the system when the first, third, and fifth autonomous networks AS1, AS3, and AS5 stop operation due to a disaster or an accident. FIG. 6 shows a situation in which failure occurs in the networks AS1, AS3, and AS5.

As shown in FIG. 6, if failure occurs in the first autonomous network AS1, each of the edge node devices N2_1 and N2_2 on the second autonomous network AS2 detects disconnection of the link to the first autonomous network AS1 and changes the communication route to a path for communication via the additional network B.

Similarly, each of the edge node devices N6_1 and N6_2 on the sixth autonomous network AS6 detects disconnection of the link to the first autonomous network AS1 and replaces the route by a path for communication via the additional network B.

The node device NP_1 on the additional network B recognizes the occurrence of failure on the first autonomous network AS1 by receiving a packet from either one of edge the node devices N2_1 and N2_2 on the second autonomous network AS2.

Also, the node device NP_2 recognizes the occurrence of failure on the first autonomous network AS1 by receiving a packet from either one of the edge nodes N6_1 and N6_2 on the sixth autonomous network AS6.

As shown in FIG. 6, at occurrence of a failure in the third autonomous network AS3, the edge node devices N2_2 on the second autonomous network AS2 detects disconnection of the link to the third autonomous network AS3 and changes the communication route to a path for communication via the additional network B.

Each of the node devices N4_1 and N4_2 on the fourth autonomous network AS4 detects disconnection of the link to the third autonomous network AS3 and replaces the communication route by a path for communication via the additional network B.

The node device NP_1 on the additional network B recognizes the occurrence of failure on the third autonomous network AS3 by receiving a packet from the edge node device N2_2 on the second autonomous network AS2.

The node device NP_3 recognizes the occurrence of failure on the third autonomous network AS3 by receiving a packet from either one of the edge node devices N4_1 and N4_2 on the fourth autonomous network AS4.

As shown in FIG. 6, if failure occurs in the fifth autonomous network AS5, the edge node device N4_1 on the fourth autonomous network AS4 detects disconnection of the link to the fifth autonomous network AS5 and replaces the communication route by a route for communication via the additional network B.

Also, each of the edge node devices N6_2 and N6_3 on the sixth autonomous network AS6 detects disconnection of the link to the fifth autonomous network AS5 and changes the communication route to a path for communication via the additional network B.

The node device NP_3 on the additional network B recognizes the occurrence of failure on the fifth autonomous network AS5 by receiving a packet from the edge node device N4_1 on the fourth autonomous network AS4.

The node device NP_2 recognizes the occurrence of failure on the fifth autonomous network AS5 by receiving a packet from either one of the edge node devices N6_2 and N6_3 on the sixth autonomous network AS6.

The node devices NP_1 to NP_4 on the additional network B collect BGP4 information of the existing network A and hence recognize that the second and sixth autonomous networks AS2 and AS6 communicated with each other via the third to fifth autonomous networks AS3 to AS5 (AS3→AS4→AS5).

Therefore, according to the BGP4 information gathered from the existing network A, the node devices NP_1 to NP_4 on the additional network B form a route as NP1→NP3→NP4→NP2 in consideration of the route AS2→AS3→AS4→AS5→AS6 on the existing network A, without forming a route from NP_1 to NP_2, to thereby relay traffic between the second and sixth autonomous networks AS2 and AS6, namely, through a path of AS2→NP1→NP_3→NP_4→NP_2→AS6.

As a result, according to the network of the embodiment, even if failure occurs on the first, third, and fifth autonomous networks AS1, AS3, and AS5, it is possible to continue communication between the second and sixth autonomous networks AS2 and AS6.

In the embodiment, the node devices NP_1 to NP_4 on the additional network B collect BGP4 information on the existing network A to conduct routing control on the additional network B in consideration of the policy of the existing network A in the information. It is hence possible to configure a communication route "NP_1→NP_3→NP_4→NP_2" reflecting the route "AS2→AS3→AS4→AS5→AS6" on the existing network A to continue the communication through the route.

In FIG. 6, based on the BGP4 information of the existing network A, the node devices NP_1 to NP_4 on the additional network B carry out the routing control as NP_1→NP_3→NP_4→NP_2 on the additional network B by reflecting the policy of the existing network A. However, if changing the route is allowed in the policy setting of the existing network A based on the BGP4 information, it is possible to selectively conduct the routing control as NP_1→NP_2 on the additional network B according to the BGP4 information.

The edge node devices of the embodiment monitor the state of links between the autonomous networks AS1 to AS6 included in the existing network A. At detection of disconnection of a link or occurrence of failure, the edge node device controls to change the communication route between the own autonomous network and a communicating autonomous network faced therewith to a route which passes the additional network B, to thereby process traffic on the existing network A via the additional network B.

After the link disconnection or the failure is restored, the edge node device performs control to change the route passing the additional network B to the original route passing the autonomous network AS1 to AS6 included in existing network A, to process traffic via the route on the existing network A, the route being used before the link disconnection or the failure was detected.

During the period from the changeover of the route to the restoration of the original route, i.e., the period in the switched state, the edge node device carries out control to prevent the other node devices from altering the BGP4 routing information.

For this purpose, the edge node device of the embodiment masks the information of the communication route when the route is replaced by the route passing the additional network B such that the information is not reflected in the routing.

In short, the edge node device controls operation as if the BGP4 information includes the communication route associated with the link disconnection. Although the actual communication route is changed to the route passing the additional network B, this does not reflect in the BGP4 information under control of the device.

The routing information received from the autonomous networks AS1 to AS6 in which failure occurs is kept unchanged. The edge node device issues a keep alive message of BGP4 instead of the node device of the networks AS1 to AS6 in which failure occurs.

The edge node device controls switching of the communication route by overwriting data in the forwarding tables 221 and 231.

The edge node device performs control to discard traffic which is to be transferred to the autonomous network in which failure occurs. This discarding control is also carried out by overwriting data in the forwarding tables 221 and 231.

The additional network B is only required to have a minimum data transfer capacity to process traffic between the autonomous networks AS1 to AS6 on the existing network A. The network B is not required to configure a large-sized network in which, for example, the existing network A is completely duplicated. It is possible to adopt a small-sized and inexpensive network as the additional network B.

According to the network of the embodiment, a backup-dedicated network, namely, the additional network B is added to the existing network A including a plurality of autonomous systems AS1 to AS 6 to economically provide redundancy to the network. At occurrence of failure, the packet route is switched from the existing network A to the additional network B to restore the interrupted communication.

In the network of the embodiment, by expanding the additional network B in size and transfer capacity, reliability of communication through the network is improved in proportion to the investment cost for the devices and the transmission paths.

Since an existing routing protocol is employed in the network of the embodiment, migration from the existing network A can be easily implemented.

The network B is constructed in a mesh in the embodiment, but may also be formed in the shape of a ring or a bus.

According to the network of the embodiment, if a detour of traffic is required not only at occurrence of failure on the existing network A, but also at, e.g., maintenance or replacement of a device or a transmission path, the network may be constructed to manually change the packet route to the additional network B.

In the network of the embodiment, to avoid congestion and to improve Quality Of Service (QoS), the additional network B may also be utilized to separate any one of the autonomous networks AS1 to AS6 from the existing network A.

Although an interface connection is one-to-one between the networks A and B in the network of the embodiment, the interface may be dispensed with on the side of the additional network B by arranging a line concentrator between the networks A and B.

The switching control software 112 of the embodiment may be implemented by using a hardware state machine.

The embodiments described above are only favorable embodiments of the present invention, but the present invention is not restricted by the embodiments. The embodiments may be changed and modified by those skilled in the art into various embodiments within the scope and spirit of the present invention.

For example, the control operation in each constituent component of the network of the above embodiment may be performed using hardware, software, or a combination thereof.

If the processing is executed by software, a program including a processing sequence thereof may be installed in a memory of a computer mounted in hardware dedicated to the processing so that the program is executed by the computer. Or, the program may be installed for execution thereof in a general computer capable of executing various processing.

For example, the program may be beforehand stored in a recording medium such as a hard disk or a Read Only memory (ROM). Also, the program may be temporarily or permanently stored or recorded in a removable recording medium. The recording medium of this kind may be provided as package software. The removable recording medium may be, for example, a floppy (registered trademark) disk, a Compact Disk Read Only memory (CD-ROM), a MagnetoOptical (MO) disk, a Digital Versatile Disc (DVD), a magnetic disk, or a semiconductor memory.

The program is then read from the removable recording medium to be installed in a computer. Alternatively, the program is sent wirelessly from a download site to a computer. Or, the program is delivered via a network through wire to a computer.

The network of the embodiments may be constructed such that the operation steps are processed in a time-series fashion on the basis of the processing described above or the operation steps are concurrently or individually carried out according to processing capacity of the module which executes the processing or according to necessity.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

An example 1 is a network comprising:
an existing network comprising a plurality of autonomous networks in which one and the same routing protocol is employed; and
an additional network added to the existing network to provide redundancy, the additional network being an autonomous network dedicated to backup routes and being less in size than the existing network,
wherein traffic on the existing network is transmitted by use of the additional network.

An example 2 is the network in accordance with the example 1, wherein at occurrence of failure on the existing network, the traffic on the existing network is transmitted by use of the additional network.

An example 3 is the network in accordance with the example 1 or 2, the traffic on the existing network is transmitted by use of the additional network by reflecting routing in the existing network.

An example 4 is the network in accordance with one of the examples 1 to 3, wherein an edge node device in the autonomous network included in the existing network is connected to a node device on the additional network.

An example 5 is the network in accordance with the example 4, wherein the node device is less in a data transfer capacity than the edge node device.

An example 6 is the network in accordance with the example 4 or 5, wherein an interface card is added to the edge node device to connect the edge node device to the node device.

An example 7 is the network in accordance with the example 4 or 6, wherein the edge node device comprises a switching control module to control switching to the additional network.

An example 8 is the network in accordance with the example 7, wherein the switching control module controls, at occurrence of failure on the existing network, operation of the network to conduct a switching operation from the existing network to the additional network, to thereby transmit the traffic on the existing network by use of the additional network.

An example 9 is the network in accordance with the example 8, wherein the switching control module controls, after the failure on the existing network is recovered, operation of the network to conduct a switching operation from the additional network to the existing network to thereby transmit the traffic by use of a route employed on the existing network before the occurrence of the failure, the traffic which has been controlled to transmit by use of the additional network.

An example 10 is a node device included in an autonomous network in which one and the same routing protocol is employed, wherein:
the node device is an edge node device connecting to another autonomous network;
the plurality of autonomous networks included in an existing network to which an additional network is added to provide redundancy, the additional network being an autonomous network dedicated to backup routes and being less in size than the existing network; and
the edge node device switches from the existing network to the additional network to transmit traffic on the existing network by use of the additional network.

An example 11 is the edge node device in accordance with the example 10, wherein the edge node device switches, at occurrence of failure on another autonomous network connecting to the edge node device, from the existing network to the additional network to transmit the traffic on the existing network by use of the additional network.

An example 12 is a network redundancy method for use with an existing network including a plurality of autonomous networks in which one and the same routing protocol is employed, comprising the steps of:
forming the existing network redundantly by adding an additional network which is an autonomous network dedicated to backup routes to the existing network, the additional network being less in size than the existing network; and
transmitting traffic on the existing network by use of the additional network.

An example 13 is a network redundancy method for use with a node device included in an autonomous network in which one and the same routing protocol is employed, wherein:
the node device is an edge node device connecting to another autonomous network;
the plurality of autonomous networks included in an existing network to which an additional network is added to provide redundancy, the additional network being an autonomous network dedicated to backup routes and being less in size than the existing network; and
the edge node device performs steps of: switching from the existing network to the additional network; and transmitting traffic on the existing network by use of the additional network.

An example 14 is a recording medium storing a network redundancy program to be executed on a node device included in an autonomous network in which one and the same routing protocol is employed, wherein:
the node device is an edge node device connecting to another autonomous network;
the plurality of autonomous networks included in an existing network to which an additional network is added to provide redundancy, the additional network being an autonomous network dedicated to backup routes and being less in size than the existing network; and
the program makes the edge node device execute processing of: switching from the existing network to the additional network; and transmitting traffic on the existing network by use of the additional network. An exemplary embodiment may be summarized as follows.

There is provided a network capable of coping with occurrence of failure including a plurality of autonomous networks. The network includes an existing network A including a plurality of autonomous networks AS1 to AS6 in which the same routing protocol is employed and an additional network B added to the existing network to provide redundancy to the network. The additional network B is an autonomous network ASP dedicated to backup routes and is less in size than the existing network A. Traffic on the existing network A is transmitted by use of the additional network B.

## Claims

1. An edge node device suitable for an autonomous network (AS2) of an existing network (A) in which one and the same routing protocol is used to route traffic in the existing network (A), wherein:
the edge node device (N2_1 to N2_2) is adapted to connect to another autonomous network (AS1, AS3) of the existing network (A);
the edge node device (N2_1 to N2_2) is adapted to switch from the existing network (A) to the additional network (B) to transmit traffic on the existing network (A) by use of the additional network (B);
the edge node device (N2_1 to N2_2) comprises a switching control module (112) to control switching to the additional network (B);
**characterized in that**:
the edge node device (N2_1 to N2_2) is connected to a node device (NP_1) on an additional network (B), wherein the additional network (B) is constructed by one or more node devices independent of the existing network (A); and
the switching control module (112) is adapted to prevent other node devices in the existing network (A) from altering routing information during the period of switching.

2. The edge node device in accordance with claim 1, wherein the edge node device (N2_1 to N2_2) is adapted to switch, at occurrence of failure on another autonomous network (AS1) connecting to the edge node device (N2_1 to N2_2), from the existing network (A) to the additional network (B) to transmit the traffic on the existing network (A) by use of the additional network (B).

3. A network comprising:
an existing network (A) comprising a plurality of autonomous networks (AS1 to AS6) in which one and the same routing protocol is used to route traffic in each of the plurality of the autonomous networks;
wherein at least one edge node device, in accordance with claim 1 or 2, is included in each one of the plurality of autonomous networks (AS2);
an additional network (B) added to the existing network (A) to provide redundancy, the additional network (B) being an autonomous network dedicated to backup routes and being less in network size than the existing network (A),
wherein the additional network (B) is constructed by a plurality of node devices independent of the existing network (A), and
wherein traffic on the existing network (A) is transmitted by use of the additional network (B).

4. The network in accordance with claim 3, wherein at occurrence of failure on the existing network (A), the traffic on the existing network is transmitted by use of the additional network (B).

5. The network in accordance with claim 3 or 4, wherein the traffic on the existing network (A) is transmitted by use of the additional network (B) by configuring a route "NP_1 → NP_3 → NP_4 → NP_2" reflecting the route "AS2→ AS3 → AS4 → AS5 → AS6" in the existing network (A).

6. The network in accordance with one of claims 3 to 5, wherein the node device (NP_1) on the additional network (B) is less in a data transfer capacity than the edge node device (N2_1 to N2_2).

7. The network in accordance with one of claims 3 to 6, wherein an interface card (11, 12) is added to the edge node (N2_1 to N2_2) device to connect the edge node device to the node device (NP_1) on the additional network (B).

8. The network in accordance with one of claims 3 to 7, wherein the switching control module (112) is adapted to control, at occurence of failure on the existing network (A), operation of the network to conduct a switching operation from the existing network (A) to the additional network (B), to thereby transmit the traffic on the existing network (A) by use of the additional network (B).

9. The network in accordance with claim 8, wherein the switching control module (112) is adapted to control, after the failure on the existing network (A) is recovered, operation of the network to conduct a switching operation from the additional network (B) to the existing network (A) to thereby transmit the traffic by use of a route employed on the existing network (A) before the occurrence of the failure, the traffic which has been controlled to transmit by use of the additional network (B).

10. The network in accordance with one of claims 3 to 9, wherein the edge node device is adapted to control operation as if the routing information includes a communication route associated with the link disconnection.

11. The network in accordance with one of claims 3 to 10, wherein the edge node device is adapted to issue a keep alive message instead of the node device of the existing network in which failure occurs.

12. A network redundancy method for an edge node device included in an autonomous network of an existing network (A) in which one and the same routing protocol is used to route traffic of the existing network (A), wherein:
the edge node device (NS-1 to N2-2) connects to another autonomous network (AS1) of the existing network (A);
the edge node device (N2_1, N2_2) performs steps of switching from the existing network (A) to the additional network (B) and transmitting traffic on the existing network (A) by use of the additional network (B);
wherein the edge node device comprises a switching control module controlling switching to the additional network (B);
**characterized in that**:
the edge node device (N2_1 to N2_2) is connected to a node device (NP_1) on an additional network (B), wherein the additional network (B) is constructed by one or more node devices independent of the existing network (A); and
the switching control module prevents other node devices in the existing network (A) from altering routing information during the period of switching.

13. A network redundancy method in accordance with claim 12, for the existing network (A) including a plurality of autonomous networks (AS1 to AS6) in which one and the same routing protocol is used to route traffic in each of the plurality of the autonomous networks, comprising the steps of:
forming the existing network (A) redundantly by adding an additional network (B) which is an autonomous network dedicated to backup routes to the existing network (A), the additional network (B) being less in network size than the existing network (A) and wherein the additional network (B) is constructed by a plurality of node devices independent of the existing network (A); transmitting traffic on the existing network (A) by use of the additional network (B).

14. A recording medium comprising program code adapted to carry out the steps of any of the method-claim 12 - 13, when run on a computer.

## Patentansprüche

1. Randknotengerät, welches für ein autonomes Netzwerk (AS2) eines bestehenden Netzwerks (A) geeignet ist, in welchem ein Routing-Protokoll verwendet wird, um Verkehr in dem bestehenden Netzwerk (A) zu routen, wobei:
das Randknotengerät (N2_1 bis N2_2) dazu ausgelegt ist, ein anderes autonomes Netzwerk (AS1, AS3) des bestehenden Netzwerks (A) anzuschließen;
das Randknotengerät (N2_1 bis N2_2) dazu ausgelegt ist, von dem bestehenden Netzwerk (A) auf das zusätzliche Netzwerk (B) zu schalten, um Verkehr auf dem bestehenden Netzwerk (A) unter Verwendung des zusätzlichen Netzwerks (B) zu übertragen;
das Randknotengerät (N2_1 bis N2_2) ein Schalt-Steuerungsmodul (112) umfasst, um Schalten auf das zusätzliche Netzwerk (B) zu steuern;
**dadurch gekennzeichnet, dass**:
das Randknotengerät (N2_1 bis N2_2) an ein Knotengerät (NP_1) auf einem zusätzlichen Netzwerk (B) angeschlossen ist, wobei das zusätzliche Netzwerk (B) durch ein oder mehrere von dem bestehenden Netzwerk (A) unabhängige Knotengeräte aufgebaut ist; und
das Schalt-Steuerungsmodul (112) dazu ausgelegt ist, zu verhindern, dass andere Knotengeräte in dem existierenden Netzwerk (A) während der Dauer des Schaltens eine Routing-Information ändern.

2. Randknotengerät nach Anspruch 1, wobei das Randknotengerät (N2_1 bis N2_2) dazu ausgelegt ist, bei Auftreten eines Fehlers auf einem anderen autonomen Netzwerk (AS1), welches an das Randknotengeräte (N2_1 bis N2_2) angeschlossen ist, von dem bestehenden Netzwerk (A) auf das zusätzliche Netzwerk (B) zu schalten, um den Verkehr auf dem bestehenden Netzwerk (A) durch Verwendung des zusätzlichen Netzwerks (B) zu übertragen.

3. Netzwerk, umfassend:
ein bestehendes Netzwerk (A), welches eine Mehrzahl von autonomen Netzwerken (AS1 bis AS6) umfasst, in denen ein Routing-Protokoll verwendet wird, um Verkehr in jedem der Mehrzahl von autonomen Netzwerken zu routen;
wobei wenigstens ein Randknotengerät in Übereinstimmung mit Anspruch 1 oder 2 in jedem der Mehrzahl von autonomen Netzwerken (AS2) enthalten ist;
ein zu dem bestehenden Netzwerk (A) hinzugefügtes zusätzliches Netzwerk (B), um Redundanz vorzusehen, wobei das zusätzliche Netzwerk (B) ein autonomes Netzwerk ist, das Backup-Routen zugeordnet ist, und hinsichtlich Netzwerkgröße kleiner als das bestehende Netzwerk (A) ist,
wobei das zusätzliche Netzwerk (b) durch eine Mehrzahl von Knotengeräten aufgebaut ist, welche von dem bestehenden Netzwerk (A) unabhängig sind, und
wobei Verkehr auf dem bestehenden Netzwerk (A) durch Verwendung des zusätzlichen Netzwerks (B) übertragen wird.

4. Netzwerk nach Anspruch 3, wobei bei Auftreten eines Fehlers auf dem bestehenden Netzwerk (A) der Verkehr auf dem bestehenden Netzwerk durch Verwendung des zusätzlichen Netzwerks (B) übertragen wird.

5. Netzwerk nach Anspruch 3 oder 4, wobei der Verkehr auf dem bestehenden Netzwerk (A) durch Verwendung des zusätzlichen Netzwerks (B) durch Konfigurieren einer Route "NP_1→ NP_3 → NP_4 → NP_2" übertragen wird, welche die Route "AS2 → AS3 → AS4 → AS5 → AS6" in dem bestehenden Netzwerk (A) widerspiegelt.

6. Netzwerk nach einem der Ansprüche 3 bis 5, wobei das Knotengerät (NP_1) auf dem zusätzlichen Netzwerk (B) hinsichtlich einer Datenübertragungskapazität kleiner als das Randknotengerät (N2_1 bis N2_2) ist.

7. Netzwerk nach einem der Ansprüche 3 bis 6, wobei eine Schnittstellenkarte (11, 12) zu dem Randknotengerät (N2_1 bis N2_2) hinzugefügt ist, um das Randknotengerät an das Knotengerät (NP_1) auf dem zusätzlichen Netzwerk (B) anzuschließen.

8. Netzwerk nach einem der Ansprüche 3 bis 7, wobei das Schalt-Steuerungsmodul (112) dazu ausgelegt ist, bei Auftreten eines Fehlers auf dem bestehenden Netzwerk (A) einen Betrieb des Netzwerks derart zu steuern, dass es eine Schaltoperation von dem bestehenden Netzwerk (A) auf das zusätzliche Netzwerk (B) durchführt, um dabei den Verkehr auf dem bestehenden Netzwerk (A) durch Verwendung des zusätzlichen Netzwerks (B) zu übertragen.

9. Netzwerk nach Anspruch 8, wobei das Schalt-Steuerungsmodul (112) dazu ausgelegt ist, nachdem der Fehler auf dem bestehenden Netzwerk (A) wiederhergestellt ist, den Betrieb des Netzwerks derart zu steuern, dass es eine Schaltoperation von dem zusätzlichen Netzwerk (B) auf das bestehende Netzwerk (A) durchführt, um dabei den Verkehr durch Verwendung einer auf dem bestehënden Netzwerk (A) vor dem Auftreten des Fehlers angewendete Route zu übertragen, wobei der Verkehr jener ist, welcher derart gesteuert wurde, dass er durch Verwendung des zusätzlichen Netzwerks (B) übertragen wird.

10. Netzwerk nach einem der Ansprüche 3 bis 9, wobei das Randknotengerät dazu ausgelegt ist, den Betrieb so zu steuern, als ob die Routing-Information eine Kommunikationsroute enthält, welche der Verbindungstrennung zugeordnet ist.

11. Netzwerk nach einem der Ansprüche 3 bis 10, wobei das Randknotengerät dazu ausgelegt ist, anstelle von dem Knotengerät des bestehenden Netzwerks, in welchem der Fehler aufgetreten ist, eine Aufrechterhaltungsnachricht auszugeben.

12. Netzwerk-Redundanz-Verfahren für ein Randknotengerät, welches in einem autonomen Netzwerk eines bestehenden Netzwerks (A) enthalten ist, in welchem ein Routing-Protokoll verwendet wird, um Verkehr auf dem bestehenden Netzwerk (A) zu routen, wobei:
das Randknotengerät (N2_1 bis N2_2) ein anderes autonomes Netzwerk (AS1) des bestehenden Netzwerks (A) abschließt;
das Randknotengerät (N2_1 bis N2_2) Schritte des Schaltens von dem bestehenden Netzwerk (A) auf das zusätzliche Netzwerk (B) und des Übertragens von Verkehr auf dem bestehenden Netzwerk (A) durch Verwendung des zusätzlichen Netzwerks (B) durchführt;
wobei das Randknotengerät ein Schalt-Steuerungsmodul umfasst, welches Schalten auf das zusätzliche Netzwerk (B) steuert;
**dadurch gekennzeichnet, dass**:
das Randknotengerät (N2_1 bis N2_2) an ein Knotengerät (NP_1) auf einem zusätzlichen Netzwerk (B) angeschlossen ist, wobei das zusätzliche Netzwerk (B) durch ein oder mehrere von dem bestehenden Netzwerk (A) unabhängige Knotengeräte aufgebaut ist; und
das Schalt-Steuerungsmodul verhindert, dass andere Knotengeräte in dem bestehenden Netzwerk (A) während der Dauer des Schaltens eine Routing-Information ändern.

13. Netzwerk-Redundanz-Verfahren nach Anspruch 12 für das bestehende Netzwerk (A), in welchem eine Mehrzahl von autonomen Netzwerken (AS1 bis AS6) enthalten ist, in welchen ein Routing-Protokoll verwendet wird, um Verkehr in jedem der Mehrzahl von autonomen Netzwerken zu routen, umfassend die Schritte:
redundantes Bilden des bestehenden Netzwerks (A) durch Hinzufügen eines zusätzlichen Netzwerks (B), welches ein autonomes Netzwerk ist, das Backup-Routen zugeordnet ist, zu dem bestehenden Netzwerk (A), wobei das zusätzliche Netzwerk (B) hinsichtlich Netzwerkgröße kleiner als das bestehende Netzwerk (A) ist und wobei das zusätzliche Netzwerk (B) durch eine Mehrzahl von Knotengeräten aufgebaut ist, welche von dem bestehenden Netzwerk (A) unabhängig sind; Übertragen von Verkehr auf dem bestehenden Netzwerk (A) durch Verwendung des zusätzlichen Netzwerks (B).

14. Aufzeichnungsmedium, umfassend Programmcode, der, wenn er auf einem Computer ausgeführt wird, die Schritte eines der Verfahrensansprüche 12 - 13 ausführt.

## Revendications

1. Dispositif de noeud de bord approprié pour un réseau autonome (AS2) d'un réseau existant (A) dans lequel un seul et même protocole de routage est utilisé pour acheminer le trafic dans le réseau existant (A), dans lequel :
le dispositif de noeud de bord (N2_1 à N2_2) est adapté pour se connecter à un autre réseau autonome (AS1, AS3) du réseau existant (A) ;
le dispositif de noeud de bord (N2_1 à N2_2) est adapté pour commuter du réseau existant (A) à un réseau additionnel (B) pour transmettre le trafic sur le réseau existant (A) à l'aide du réseau additionnel (B) ;
le dispositif de noeud de bord (N2_1 à N2_2) comprend un module de commande de commutation (112) pour commander la commutation au réseau additionnel (B),
**caractérisé en ce que** :
le dispositif de noeud de bord (N2_1 à N2_2) est connecté à un dispositif de noeud (NP_1) sur le réseau additionnel (B), dans lequel le réseau additionnel (B) est constitué par un ou plusieurs dispositifs de noeud indépendants du réseau existant (A) ; et
le module de commande de commutation (112) est adapté pour empêcher d'autres dispositifs de noeud dans le réseau existant (A) d'altérer les informations de routage pendant la période de commutation.

2. Dispositif de noeud de bord selon la revendication 1, dans lequel le dispositif de noeud de bord (N2_1 à N2_2) est adapté, lors d'une occurrence d'une défaillance sur un autre réseau autonome (AS1) connecté au dispositif de noeud de bord (N2_1 à N2_2), pour commuter du réseau existant (A) au réseau additionnel (B) pour transmettre le trafic sur le réseau existant (A) à l'aide du réseau additionnel (B).

3. Réseau comprenant :
un réseau existant (A) comprenant une pluralité de réseaux autonomes (AS1 à AS6) dans lesquels un seul et même protocole de routage est utilisé pour acheminer le trafic dans chacun de la pluralité des réseaux autonomes ;
dans lequel au moins un dispositif de noeud de bord, en conformité avec la revendication 1 ou 2, est inclus dans chacun de la pluralité de réseaux autonomes (AS2) ;
un réseau additionnel (B) ajouté au réseau existant (A) pour assurer une redondance, le réseau additionnel (B) étant un réseau autonome dédié à des itinéraires de secours et ayant une taille de réseau inférieure à celle du réseau existant (A),
dans lequel le réseau additionnel (B) est constitué par une pluralité de dispositifs de noeud indépendants du réseau existant (A), et
dans lequel le trafic sur le réseau existant (A) est transmis à l'aide du réseau additionnel (B).

4. Réseau selon la revendication 3, dans lequel lors de l'occurrence d'une défaillance sur le réseau existant (A), le trafic sur le réseau existant est transmis à l'aide du réseau additionnel (B).

5. Réseau selon la revendication 3 ou 4, dans lequel le trafic sur le réseau existant (A) est transmis à l'aide du réseau additionnel (B) en configurant un itinéraire « NP_1 → NP_3 → NP_4 → NP_2 » reflétant l'itinéraire « AS2 → AS3 → AS4 → AS5 → AS6 » dans le réseau existant (A).

6. Réseau selon l'une des revendications 3 à 5, dans lequel le dispositif de noeud (NP_1) sur le réseau additionnel (B) a une capacité de transfert de données inférieure à celle du dispositif de noeud de bord (N2_1 à N2_2).

7. Réseau selon l'une des revendications 3 à 6, dans lequel une carte d'interface (11, 12) est ajoutée au dispositif de noeud de bord (N2_1 à N2_2) pour connecter le dispositif de noeud de bord au dispositif de noeud (NP_1) sur le réseau additionnel (B).

8. Réseau selon l'une des revendications 3 à 7, dans lequel le module de commande de commutation (112) est adapté pour commander, lors de l'occurrence d'une défaillance sur le réseau existant (A), le fonctionnement du réseau pour conduire une opération de commutation du réseau existant (A) au réseau additionnel (B), pour transmettre ainsi le trafic sur le réseau existant (A) à l'aide du réseau additionnel (B).

9. Réseau selon la revendication 8, dans lequel le module de commande de commutation (112) est adapté pour commander, après que la défaillance sur le réseau existant (A) est réparée, le fonctionnement du réseau pour conduire une opération de commutation du réseau additionnel (B) au réseau existant (A) pour transmettre ainsi le trafic à l'aide d'un itinéraire employé sur le réseau existant (A) avant l'occurrence de la défaillance, le trafic dont la transmission a été commandée à l'aide du réseau additionnel (B).

10. Réseau selon l'une des revendications 3 à 9, dans lequel le dispositif de noeud de bord est adapté pour commander le fonctionnement comme si les informations de routage incluaient un itinéraire de communication associé à la déconnection de lien.

11. Réseau selon l'une des revendications 3 à 10, dans lequel le dispositif de noeud de bord est adapté pour émettre un message d'entretien au lieu du dispositif de noeud du réseau existant dans lequel une défaillance se produit.

12. Procédé de redondance de réseau pour un dispositif de noeud de bord inclus dans un réseau autonome d'un réseau existant (A) dans lequel un seul et même protocole de routage est utilisé pour acheminer le trafic du réseau existant (A), dans lequel :
le dispositif de noeud de bord (N2_1 à N2_2) se connecte à un autre réseau autonome (AS1) du réseau existant (A) ;
le dispositif de noeud de bord (N2_1, N2_2) réalise des étapes de commutation du réseau existant (A) à un réseau additionnel (B) et de transmission du trafic sur le réseau existant (A) à l'aide du réseau additionnel (B) ;
dans lequel le dispositif de noeud de bord comprend un module de commande de commutation commandant la commutation au réseau additionnel (B) ;
**caractérisé en ce que** :
le dispositif de noeud de bord (N2_1 à N2_2) est connecté à un dispositif de noeud (NP_1) sur le réseau additionnel (B), dans lequel le réseau additionnel (B) est constitué par un ou plusieurs dispositifs de noeud indépendants du réseau existant (A) ; et
le module de commande de commutation empêche d'autres dispositifs de noeud dans le réseau existant (A) d'altérer les informations de routage pendant la période de commutation.

13. Procédé de redondance de réseau selon la revendication 12, pour le réseau existant (A) incluant une pluralité de réseaux autonomes (AS1 à AS6) dans lequel un seul et même protocole de routage est utilisé pour acheminer le trafic dans chacun de la pluralité des réseaux autonomes, comprenant les étapes de :
formation du réseau existant (A) de façon redondante en ajoutant un réseau additionnel (B) qui est un réseau autonome dédié à des itinéraires de secours au réseau existant (A), le réseau additionnel (B) ayant une taille de réseau inférieure à celle du réseau existant (A) et dans lequel le réseau additionnel (B) est constitué par une pluralité de dispositifs de noeud indépendants du réseau existant (A) ;
transmission du trafic sur le réseau existant (A) à l'aide du réseau additionnel (B).

14. Support d'enregistrement comprenant un code de programme adapté pour réaliser les étapes de l'un quelconque des procédés des revendications 12 à 13, quand il est exécuté sur un ordinateur.
